(19) Europäisches Patentamt
European Patent Office
Office européen des brevets

(11) **EP 1 619 477 A2**

(12) **EUROPEAN PATENT APPLICATION**

(43) Date of publication:
**25.01.2006 Bulletin 2006/04**

(51) Int Cl.:
***G01D 5/245*** (2006.01)

(21) Application number: **05253890.7**

(22) Date of filing: **22.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **25.06.2004 JP 2004188209**

(71) Applicant: **FANUC LTD**
**Minamitsuru-gun,**
**Yamanashi 401-0597 (JP)**

(72) Inventors:
• **Kawai, Tomohiko**
**Minamitsuru-gun**
**Yamanashi, 401-0304 (JP)**

• **Taniguchi, Mitsuyuki**
**Gotenba-shi**
**Shizuoka 412-0045 (JP)**
• **Oda, Takayuki,**
**c/o Room 12-204, FANUC**
**Minamitsuru-gun**
**Yamanashi, 401-0511 (JP)**

(74) Representative: **Billington, Lawrence Emlyn et al**
**Haseltine Lake & Co.**
**Imperial House**
**15-19 Kingsway**
**London WC2B 6UD (GB)**

(54) **Linear encoder**

(57)    A linear encoder comprises a light source, a main scale provided with a measuring pattern having a constant pitch, an index scale to which a measuring pattern having a constant pitch is mounted, and a light receiving element. The light receiving element detects the brightness generated by these patterns superposed one upon another by relative movement of the main scale with respect to the index scale. The linear encoder further comprises pattern end detecting means for detecting the end portion of the measuring pattern provided on the main scale so that the position of the end portion is used as an origin of the encoder.

FIG. 1

**Description**

BACKGROUND OF THE INVENTION

1. Field of the Invention

The present invention relates to a linear encoder, and more particularly, to detection of the origin of a linear encoder.

2. Description of the Prior Art

Generally, a linear encoder is an apparatus designed for obtaining a movement amount or a position of a movable body which moves straightly. The linear encoder obtains the movement amount or position of a movable body by outputting a position detection signal corresponding to variation of a relative position of a main scale mounted on a movable portion of the movable body with respect to an index scale mounted on a stationary portion of the movable body. Linear encoders have two types; an incremental type linear encoder for obtaining a relative position, and an absolute type linear encoder for obtaining an absolute position.

The incremental type linear encoder obtains a position merely by counting detection outputs and has no reference position and thus, this position only shows a relative position of the movable body. On the other hand, the absolute type linear encoder obtains the absolute position and thus, it is necessary to detect the position of the origin.

A conventional absolute type linear encoder obtains a relative position by photoelectrically scanning relative position detecting periodical patterns in the main scale and on the index scale, detects the origin by photoelectrically scanning origin detecting patterns in the main scale and on the index scale, thereby obtaining the absolute position (see Japanese Patent Application Laid-open No. 2002-286506).

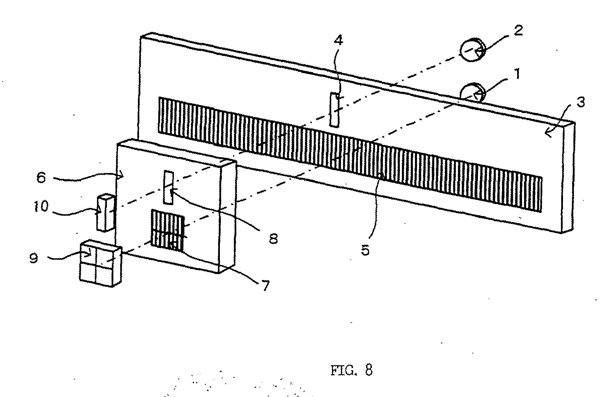

Fig. 8 is a diagram used for explaining an example of a structure of a conventional linear encoder. The linear encoder comprises amain scale 3, an index scale 6 which canmove relatively with respect to the main scale 3, a light source and a light receiving element. The light source and the light receiving element are disposed on one and the other sides with respect to the main scale 3 and the index scale 6.

Relative position detecting patterns 5 and 7 are provided in the main scale 3 and the index scale 6, respectively. The relative position detecting patterns 5 and 7 comprises periodic patterns through which light periodically passes, orwhichshield or reflect the light. Light from the relative position detecting light source 1 is detected by a relative position detecting light receiving element 9 through the relative position detecting pattern 5 in the main scale 3 and the relative position detecting pattern 7 on the index scale 6.

Absolute position detecting patterns 4 and 8 are respectively provided in the main scale 3 and the index scale 6, respectively. The absolute position detecting patterns 4 and 8 comprise patterns through which light from the light sources passes, or which shield or reflect light. Light from an absolute position detecting light source 2 is detected by an absolute position detecting light receiving element 10 through the absolute position detecting pattern 4 in the main scale 3 and the absolute position detecting pattern 8 on the index scale 6.

A relative position is obtained by a detection output of the relative position detecting light receiving element 9 having the above-described structure, and an origin position is obtained by a detection output of the absolute position detecting light receiving element 10.

In the conventional absolute position linear encoder, an origin detecting patterns are formed in the main scale and the index scale for obtaining the origin as described above, and in order to detect the origin forming pattern, a light source and a light receiving element for detecting the origin are required.

In order to detect an absolute position in a linear encoder having no origin detecting pattern on the scale, a separate apparatus for detecting the origin must be mounted on a movable body.

SUMMARY OF THE INVENTION

According to the present invention, it is possible to detect an absolute position of a movable body by regarding an end of a relative position detecting periodical patter in a main scale, without arranging an origin detecting pattern in the scale or providing a separate origin detecting apparatus.

The linear encoder according to the present invention comprises a light source, a main scale provided with a measuring pattern having a constant pitch, an index scale to which a measuring pattern having a constant pitch is mounted, and a light receiving element, in which the light receiving element detects the brightness generated by these patterns superposed one upon another by relative movement of the main scale with respect to the index scale. This linear encoder further comprises pattern end detectingmeans for detecting the end portion of the measuring pattern provided on the main scale, so that the position of the end portion of the pattern, detected by the pattern end detecting means, is used as an origin of the encoder.

A light transmitting section, a light shielding section, a light reflecting section, a light scattering section or light absorbing section may be formed on the outside of the measuring pattern in the main scale, and the pattern end detecting means may detect the light transmitting section, light shielding section, light reflecting section, light scattering section or light absorbing section based on the light transmitting through, shielded by, reflected by, scattered by, or absorbed by, the light transmitting section, detected by the light receiving element, thereby detecting the end portion of the measuring pattern.

The light receiving element may comprises an A-phase light-receiving portion and a B-phase light-receiving portion which receive lights having phases different from each other by a predetermined amount at the same position, and the pattern end detecting means detects, as the end portion of the measuring pattern, a position where both light intensity of the A-phase light-receiving portion and light intensity of the B-phase light-receiving portion become equal to or greater, or equal to or smaller than a predetermined value.

The light receiving element may comprise an A-phase light-receiving portion and a B-phase light-receiving portion, which receive lights having phases different from each other by a predetermined amount at the same position, and further a light-receiving portion of negative-phase (XA-phase) of A-phase and a light-receiving portion of negative-phase (XB-phase) of B-phase which have phase different respectively from the A-phase light-receiving portion and the B-phase light-receiving portion by an odd multiple of $\pi$. And the pattern end detecting means may detect, as the end portion of the measuring pattern, a position where a value of $(A-XA)^2 + (B-XB)^2$ becomes equal to or smaller than a predetermined value, where A is light intensity of the A-phase light-receiving portion, XA is light intensity of the XA-phase light-receiving portion, B is light intensity of the B-phase light-receiving portion, and XB is light intensity of the XB-phase light-receiving portion.

According to the present invention, it is possible to detect an absolute position of a movable body, without arranging a pattern for detecting an origin of a scale or providing a separate apparatus for detecting the origin.

BRIEF DESCRIPTION OF THE DRAWINGS

The above and other objects and features of the present invention will become apparent from the following explanation of an embodiment with reference to the accompanying drawings, wherein:

Fig. 1 is a schematic view of a linear encoder according to the present invention;
Figs. 2 are diagrams used for explaining a state of a relative position detecting pattern of a main scale and a light receiving output of a terminal portion;
Fig. 3 is a diagram of a circuit example for obtaining an origin output from an A-phase output and a B-phase output;
Figs. 4 are signal diagrams for obtaining the origin output from the A-phase output and the B-phase output;
Figs. 5 are diagrams used for explaining a state of a relative position detecting pattern of a main scale and a light receiving output of a terminal portion;
Fig. 6 is a diagram of an example of a circuit for obtaining the origin output from each phase output;
Figs. 7 are signal diagram for obtaining the origin output from each phase output; and
Fig. 8 is a diagram used for explaining an example of a structure of a conventional linear encoder.

DETAILED DESCRIPTION OF THE PREFERRED EMBODIMENTS

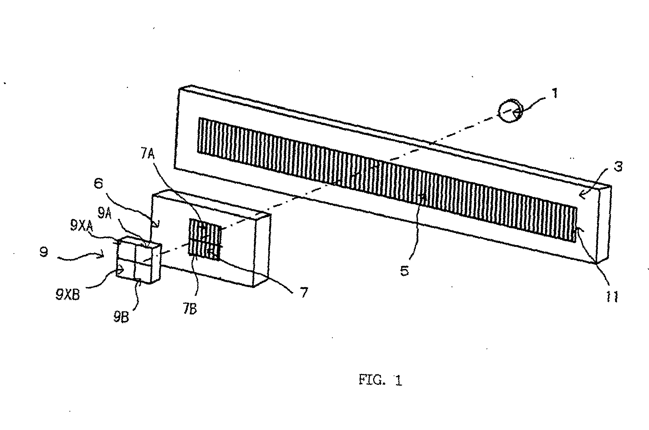

In Fig. 1, a linear encoder comprises a main scale 3, an index scale 6 capable of moving relatively with respect to the main scale, a light source and a light receiving element disposed on one and the other sides with respect to the main scale 3 and the index scale 6. Relative position detecting patterns 5 and 7 are provided in the main scale 3 and the index scale 6, respectively. The relative position detecting patterns 5 and 7 have such periodical patterns through which light from the relative position detecting light source 1 periodically passes, or which shield or reflect the light. The light from the relative position detecting light source 1 is detected by a relative position detecting light receiving element 9 through the relative position detecting pattern 5 in the main scale 3 and the relative position detecting pattern 7 on the index scale 6.

The periodic patterns may be patterns through which light passes or which shield the light, ormaybe patterns which reflects light or through which light passes, or may be patterns which reflect or scatter light.

A light shielding section 12 is formed in the main scale 3 on the outside of the relative position detecting pattern 5, adjacent to one or both ends 11 of the pattern 5. This light shielding section 12, provided on the outside of the pattern end 11, always shields lights from the relative position detecting light source 1, irrespective of position of the main scale 3, and does not allow lights to reach the relative position detecting light receiving element 9. As the intensity of the light which the relative position detecting light receiving element 9 receives through the light shielding section 12 does not exceed a predetermined level, the position of the pattern end 11 in the main scale 3 can be detected by the change in the light-receiving intensity in the relative position detecting light receiving element 9.

A light-reflecting section, light transmitting section, a light-scattering section or a light-absorbing section may be provided on the outside of the pattern end 11 in the main scale 3, instead of the light shielding section 12.

In case where a light transmitting section is provided on the outside of the pattern 5 in the main scale 3, adjacent to the pattern end 11, the light transmitting section always allows lights from the relative position detecting light source 1 to reach the relative position detecting light receiving element 9 , irrespective of position of the main scale 3. As the intensity of the light which the relative position detecting light receiving element 9 receives through the light shielding section 12 exceeds a predetermined level, the position of the pattern end 11 in the main scale 3 can be detected by the change in the light-receiving intensity in the relative position detecting light receiving element 9.

In case where a light-scattering section is provided on the outside of the pattern 5 in the main scale 3, adjacent to the pattern end 11, the light-scattering section always scatters lights from the relative position detecting light source 1, not allowing the light to reach the relative position detecting light receiving element 9 , irrespective of position of the main scale 3. As the intensity of the light which the relative position detecting light receiving element 9 receives through the light scattering section 12 does not exceeds a predetermined level, the position of the pattern end 11 in the main scale 3 can be detected by the change in the light-receiving intensity in the relative position detecting light receiving element 9.

In case where a light-absorbing section is provided on the outside of the pattern 5 in the main scale 3, adjacent to the pattern end 11, the light-absorbing section always absorbs lights from the relative position detecting light source 1, not allowing the light to reach the relative position detecting light receiving element 9 , irrespective of position of the main scale 3. As the intensity of the light which the relative position detecting light receiving element 9 receives through the light absorbing section 12 does not exceeds a predetermined level, the position of the pattern end 11 in the main scale 3 can be detected by the change in the light-receiving intensity in the relative position detecting light receiving element 9.

Formed on the index scale 6 are a relative position detecting pattern 7A, and a relative position detecting pattern 7B having a phase difference of an integral multiple of $\pi/2$ with respect to the relative position detecting pattern 7A. The relative position detecting patterns 7A and 7B are opposed to the relative position detecting pattern 5 formed in the main scale 3, and can move relative to the main scale 3 along the relative position detecting pattern 5. The phase difference of an integral multiple of $\pi/2$ is formed between the relative position detecting pattern 7A and the relative position detecting pattern 7B by shifting one relative to the other by an integral multiple of a quarter of pitch width of the light transmitting sections and light-shielding section of the patterns.

The relative position detecting light receiving element 9 includes an A-phase light-receiving portion 9A corresponding to the relative position detecting pattern 7A of the index scale 6, and a B-phase light-receiving portion 9B corresponding to the relative position detecting pattern 7B of the index scale 6.

There is a phase difference of an integral multiple of $\pi/2$ between a detection output detected by the A-phase light-receiving portion 9A and a detection output detected by the B-phase light-receiving portion 9B. As a result, dependent upon whether this phase difference is phase lead or phase delay, the relative moving direction between the main scale 3 and the index scale 6 is detected when detecting the relative position detecting pattern 5 of the main scale 3.

The linear encoder further comprises a negative-phase A-phase light-receiving portion 7XA which outputs a light-receptive signal whose phase is deviated from the A-phase light-receiving portion 9A by an odd multiple of $\pi$, and a negative-phase B-phase light-receiving portion 7XB which outputs a light-receptive signal whose phase is deviated from the B-phase light-receiving portion 9B by an odd multiple of $\pi$.

The position of origin is obtained using the light receiving output of the A-phase light-receiving portion 9A and the light receiving output of the B-phase light-receivingportion 9B as will be described later. It can also be obtained using the light receiving output of theA-phase light-receivingportion 9A , the light receiving output of the B-phase light-receiving portion 9B, the light receiving output of the negative-phase A-phase light-receiving portion 9XA and the light receiving output of the negative-phase B-phase light-receiving portion 9XB.

The case where a light shielding section is provided on the outside of the pattern 5 in the main scale 3, adjacent to the pattern end 11, will be explained below.

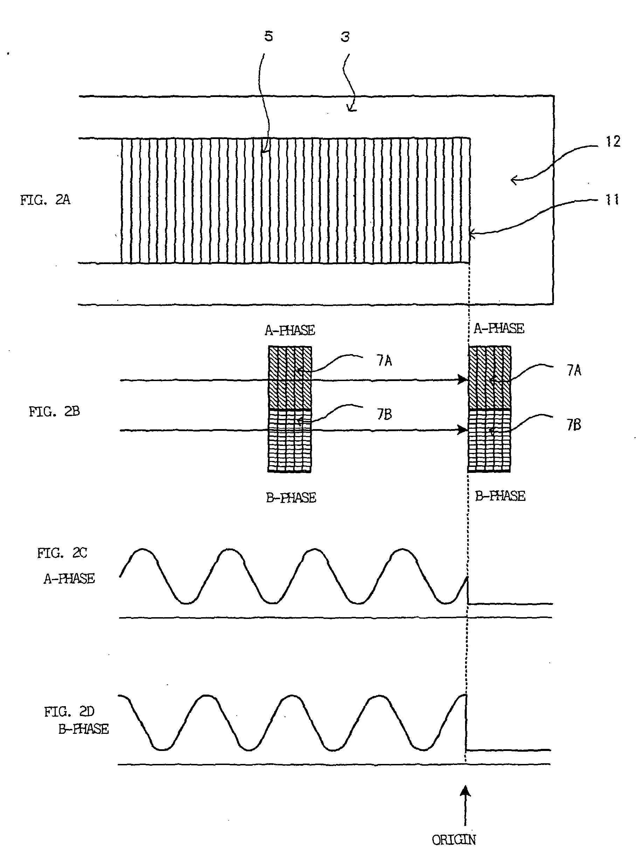

Figs. 2A to 2D are diagrams used for explaining a relative position detecting pattern 5 of the main scale 3 and a state of the light receiving output at the pattern end 11. Fig. 2A shows the main scale 3, Fig. 2B shows the index scale 6, Fig. 2C shows the light receiving output of the A-phase light-receiving portion 9A, and Fig. 2D shows the light receiving output of the B-phase light-receiving portion 9B.

As shown in Fig. 2A, a light shielding section 12 which shields lights from the relative position detecting light source 1 is provided on the outside of the pattern 5 in the main scale 3, adjacent to the pattern end 11. In the present invention, the pattern end 11 is used as the origin of scale, with the result that the origin can be detected without requiring a pattern or an apparatus for detection of origin.

While the relative position detecting patterns 7A and 7B of the index scale are opposed to the relative position detecting pattern 5, the light receiving outputs of the A-phase light-receiving portion 9A and the B-phase light-receiving portion 9B change with their relative movement, as shown in Figs. 2C and 2D.

On the other hand, if the relative position detecting patterns 7A and 7B are deviated from the end 11 of the relative position detecting pattern 5 and are opposed to the light shielding section 12, the light receiving outputs are lowered, as shown on the right side of the broken line in Figs. 2C and 2D, since lights do not reach the A-phase light-receiving portion 9A and the B-phase light-receiving portion 9B. The intensity of the light receiving output on the right side of the pattern end 11 is an offset component.

Since the intensity of the light receiving output in the light shielding section 12 does not exhibit periodical change in the relative position detecting pattern 5, the pattern end 11 can be detected by detecting this intensity change. Therefore, if the pattern end 11 is considered to be an origin, the origin of the linear encoder can be detected.

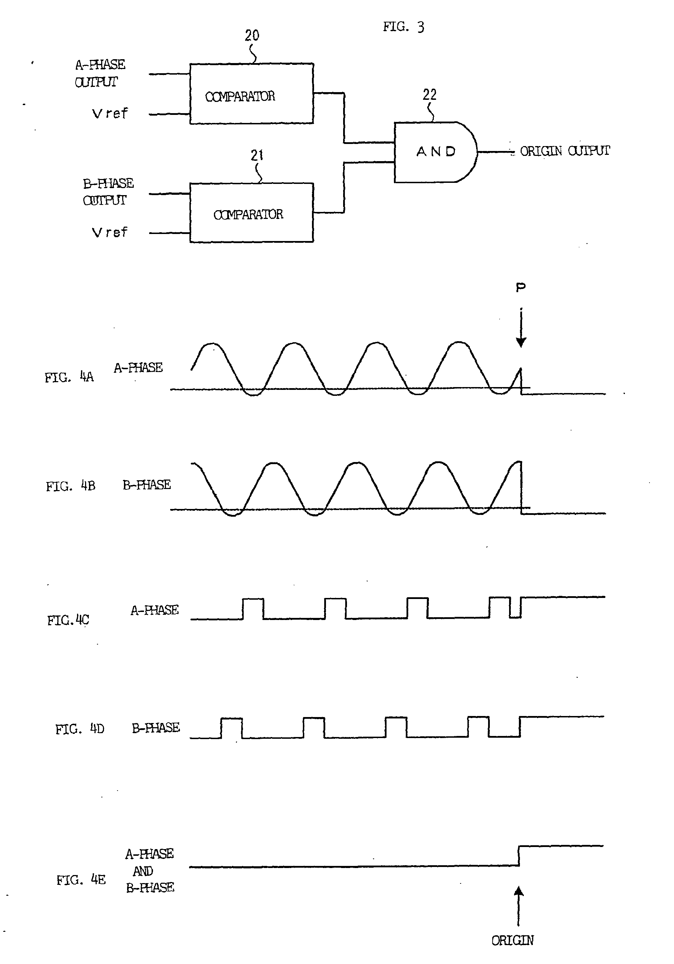

Fig. 3 shows an example of a circuit for obtaining the origin output from the A-phase output and the B-phase output. Figs. 4A to 4E show signals. In these drawings, the term "A-phase" indicates the light receiving output of the A-phase light-receiving portion 7A, and the term "B-phase" indicates the light receiving output of the B-phase light-receiving portion 7B.

The example of the circuit shown in Fig. 3 may comprise a comparator 20 which compares the A-phase output with a reference signal Vref having predetermined intensity, a comparator 21 which compares the B-phase output with a reference signal Vref having predetermined intensity, and an AND circuit 22 which obtains a logical multiplication (AND) of comparison outputs of both the comparators 20 and 21.

Fig. 4A shows the A-phase output, and Fig. 4B shows the B-phase output. In Figs. 4A and 4B, the broken lines represent levels of the reference signals Vref. In the drawings, "P" represents the position of the pattern end 11. As an area on the outside of the pattern end 11 is formed with a light shielding section which prevent transmission of light, output intensities of both the A-phase output and B-phase output are lowered.

Figs. 4C and 4D show comparison results of the A-phase and B-phase in which the reference signal Vref is used as threshold values. Fig. 4E shows logical sum of the comparison result of the A-phase and B-phase. On the side of the relative position detecting pattern 5 with respect to the pattern end portion P, the logical sum becomes "0", while, on the side of the light shielding section, the logical sum becomes "1".

In the main scale 3, as the position of the pattern end portion P is always constant irrespective of its relative position with respect to the index scale 6, this pattern end portion P can be used as an origin.

In the above-described example, the pattern end is detected using the A-phase output and the B-phase output having a phase different phases from that of the A-phase, thereby obtaining the origin position. Next, another example will be explained. In this example, the pattern end is detected using the A-phase output, the B-phase output having a phase different from that of A-phase, an output of negative phase (XA-phase) of the A-phase and an output of a negative phase (XB-phase) of the B-phase, thereby obtaining the origin position. With the use of these four light receiving outputs, it is possible to reduce the detection error caused by the offset amount included in the light receiving outputs.

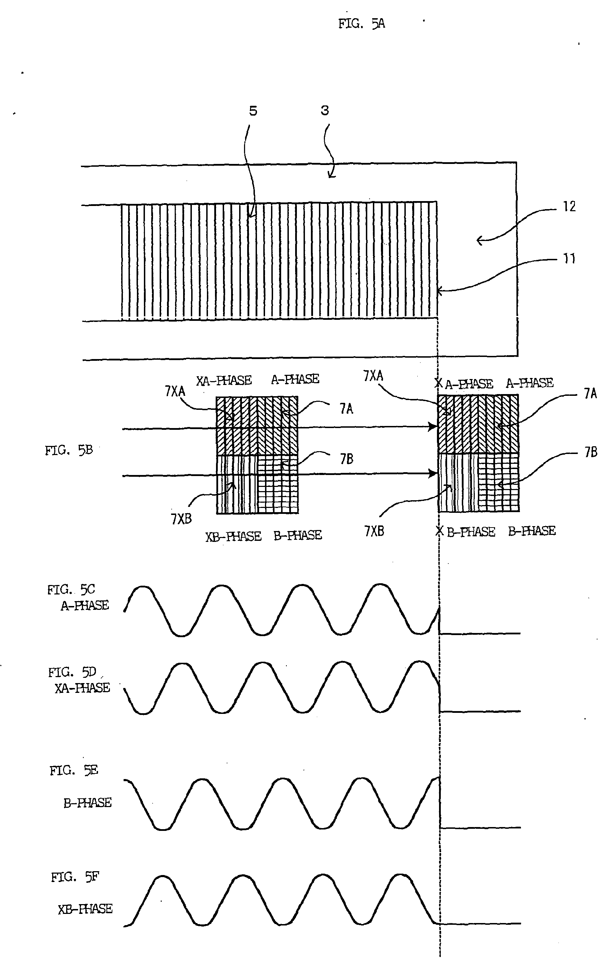

Figs. 5A to 5F are diagrams used for explaining the relative position detecting pattern of the main scale and a state of the light receiving output at the pattern end.

Fig. 5A shows the main scale 3, Fig. 5B shows the index scale 6, Figs. 5C and 5D show light receiving outputs of the A-phase light-receiving portion 9A and XA-phase light-receiving portion 9XA, and Figs. 5E and 5D show light receiving outputs of the B-phase light-receiving portion 9B and XB-phase light-receiving portion 9XB.

In Fig. 5A, like Fig. 2A, a light shielding section 12 is provided on the outside of the relative position detecting pattern 5 in the main scale 3, adjacent to the end 11 of the pattern 5. This light shielding section 12 shields lights from the relative position detecting light source 1. In this example also, like the previous example, the pattern end 11 is used as an origin of the scale, and the origin can be detected only by detecting the pattern end 11, without requiring a pattern or an apparatus for detection of origin.

While the relative position detecting patterns 7A, 7XA, 7B and 7XB of the index scale are opposed to the relative position detecting pattern 5, the light receiving outputs of the A-phase light-receiving portion 9A, the XA-phase light-receiving portion 9XA, the B-phase light-receiving portion 9B, and the XB-phase light-receiving portion 9XB change with their relative movement as shown in Figs. 5C, 5D, 5E and 5F, respectively.

On the other hand, if the relative position detecting patterns 7A, 7XA, 7B and 7XB are deviated across the end 11 of the relative position detecting pattern 5 and are opposed to the light shielding section 12 provided on the outside of the pattern end 11, lights do not reach the A-phase light-receiving portion 9A, the XA-phase light-receiving portion 9XA, and the B-phase light-receiving portion 9B. Therefore, the light receiving outputs are lowered, as shown on the right sides of the broken lines in Figs. 5C to 5F. The intensity of the light receiving output on the right side of the pattern end 11 is an offset component.

Since the intensity of the light receiving output in the light shielding section 12 does not exhibit periodical change in the relative position detecting pattern 5, the pattern end 11 can be detected by detecting this intensity change. Therefore, if the pattern end 11 is considered to be an origin, the origin of the linear encoder can be detected.

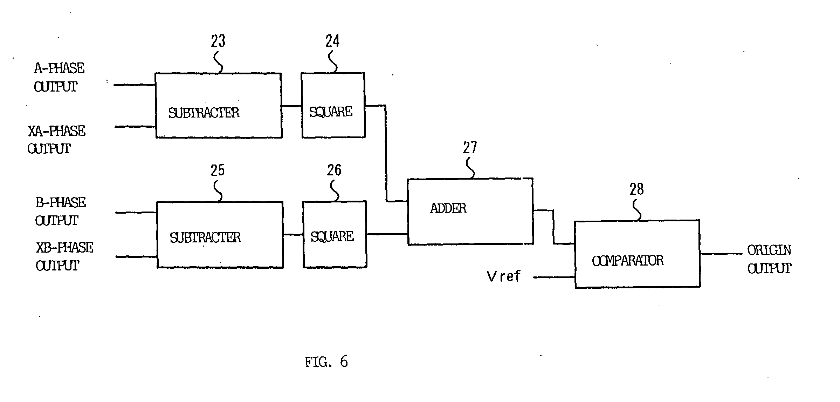

Fig. 6 shows an example of a circuit for obtaining the origin output from the A-phase output, the XA-phase output, the B-phase output and the XB-phase output. Figs. 7A to 7G show signals. Here, the A-phase output is a light receiving output of an A-phase light-receiving portion 7A, an XA-phase output is a light receiving output of an XA-phase light-receiving portion 7XA, the B-phase output is a light receiving output of the B-phase light-receiving portion 7B, and an XB-phase output is a light receiving output of an XB-phase light-receiving portion 7XB.

The example of the circuit shown in Fig. 6 may comprise a subtracter 23 for calculating a difference between the A-phase output and the XA-phase output, a subtracter 25 for calculating a difference between the B-phase output and the XB-phase output, computing elements 24 and 26 for squaring outputs of the subtracters 23 and 25, an adder 27 for adding these squaredvalues, and a comparator 28 which compares the output of the adder 27 with a reference signal Vref having a predetermined intensity. The reference signal Vref may be a value different from the reference signal Vref used in Fig. 3.

Here, if $\alpha$ denotes amplitude and $\beta$ denotes an offset amount, A-phase output can be expressed as ($\alpha\sin\theta + \beta$), XA-phase output can be expressed as (-$\alpha\sin\theta + \beta$), B-phase output can be expressed as ($\alpha\cos\theta + \beta$), and XA-phase output can be expressed as (-$\alpha\cos\theta + \beta$).

The above circuit substantially carries out calculation of (A-phase output - XA-phase output)$^2$ + (B-phase output - XB-phase output)$^2$.

If the above calculation is simplified,

$$
\begin{aligned}
&(\text{A-phase output} - \text{XA-phase output})^2 + (\text{B-phase output} - \text{XB-phase output})^2 \\
&= ((\alpha\sin\theta + \beta) - (-\alpha\sin\theta + \beta))^2 + ((\alpha\cos\theta + \beta) - (-\alpha\cos\theta + \beta))^2 \\
&= (2\alpha\sin\theta)^2 + (2\alpha\cos\theta)^2 \\
&= 4\alpha^2.
\end{aligned}
$$

In the above calculation, the output becomes equal to four times of a square of amplitudes $\alpha$ of the A-phase and B-phase, and the output is always a constant value when it is in the relative position detecting pattern. When the relative position detecting pattern of the index scale does not fall within the relative position detecting pattern of the main scale, i.e., when it is on the outside of the pattern end, both (A-phase output - XA-phase output) and (B-phase output - XB-phase output) are "0", and the calculation output becomes "0".

With this, it becomes possible to detect the absolute position by monitoring (A-phase output - XA-phase output)$^2$ +(B-phase output - XB-phase output)$^2$.

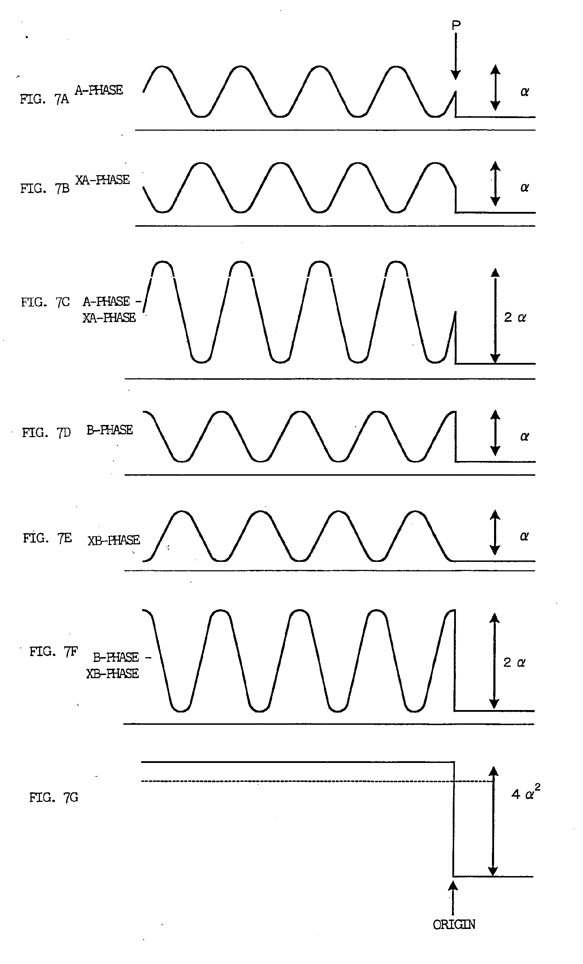

Fig. 7A shows the A-phase output, Fig. 7B shows the XA-phase output, Fig. 7D shows the B-phase output, and Fig. 7E shows the XB-phase output. In the drawings, symbol P denotes a pattern end portion. On the side of the light shielding section with respect to the pattern end portion P, since the light is shielded by the light shielding section, the output intensities of the A-phase output, the XA-phase output, the B-phase output and the XB-phase output are all lowered. Fig. 7C shows (A-phase output - XA-phase output) and Fig. 7F shows (B-phase output - XB-phase output).

If the square of the difference output shown in Figs. 7C and the square of the difference output shown in Figs. 7F are added to each other, $4\alpha^2$ in Fig. 7G is obtained. If this output is compared while using the reference signal Vref as a threshold value, the pattern end portion P can be detected.

Since the position of the pattern end portion P is always constant in the main scale 3, irrespective of its relative position with respect to the index scale 6, the pattern end portion P can be used as an origin.

The reference signal Vref may be set to any value that does not prevent detecting an origin by mistake when carrying out position measurement using the scale, more specifically, to a value sufficiently smaller than the above $4\alpha^2$. Although the light shielding section is provided on the outside of the end 11 of the pattern 5 in the main scale 3 in the embodiments as described above, a light transmitting section, light scattering section or light reflecting section may be provided on the outside of the end 11 of the pattern 5 in the main scale 3, in place of the light shielding section.

According to the present invention, considering the ends of the periodic patterns provided on a main scale and an index scale for the detection of their relative position as an origin, the absolute position of a movable body can be detected without arranging a pattern for detecting of origin or without providing a separate apparatus for detection of origin. This technique can be applied to an encoder which moves in a form of an arc, or a rotary encoder whose rotation angle is 360° or less, in addition to a linear encoder.

Further, this technique can also be applied to a magnetic encoder, in addition to an optical encoder, if N-pole or S-pole magnetic field region is provided or different magnetic resistances are given in portions corresponding to the light transmitting section and light shielding section.

**Claims**

1.   A linear encoder comprising a light source, a main scale provided with a measuring pattern having a constant pitch, an index scale to which a measuring pattern having a constant pitch is mounted, and a light receiving element, in which said light receiving element detects the brightness generated by these patterns superposed one upon another by relative movement of the main scale with respect to the index scale, the linear encoder further comprising; pattern end detecting means for detecting the end portion of the measuring pattern provided on the main scale, wherein
the position of the end portion of the pattern, detected by said pattern end detecting means, is used as an origin of the encoder.

2.   The linear encoder according to claim 1, wherein
a light transmitting section is formed on the outside of the measuring pattern in the main scale, and
said pattern end detecting means detects the light transmitting section based on the light transmitting through the light transmitting section, detected by the light receiving element, thereby detecting the end portion of said measuring pattern.

3.   The linear encoder according to claim 1, wherein
a light shielding section is formed on the outside of the measuring pattern in the main scale, and
said pattern end detecting means detects the light shielding section based on the light shielded by the light transmitting section, detected by the light receiving element, thereby detecting the end portion of said measuring pattern.

4.   The linear encoder according to claim 1, wherein
a light reflecting section is formed on the outside of the measuring pattern in the main scale, and
said pattern end detecting means detects the light reflecting section based on the light reflected by the light transmitting section, detected by the light receiving element, thereby detecting the end portion of said measuring pattern.

5.   The linear encoder according to claim 1, wherein
a light scattering section or light absorbing section is formed on the outside of the measuring pattern in the main scale, and
said pattern end detecting means detects the light scattering section or light absorbing section based on the light scattered or absorbed by the light scattering section or light absorbing section, detected by the light receiving element, thereby detecting the end portion of said measuring pattern.

6.   The linear encoder according to any one of claims 2 to 5, wherein said light receiving element comprises an A-phase light-receiving portion and a B-phase light-receiving portion which receive lights having phases different from each other by a predetermined amount at the same position, and
said pattern end detecting means detects, as the end portion of the measuring pattern, a position where both light intensity of the A-phase light-receiving portion and light intensity of the B-phase light-receiving portion become equal to or greater, or equal to or smaller than a predetermined value.

7.   The linear encoder according to any one of claims 2 to 5, wherein the light receiving element comprises an A-phase light-receiving portion and a B-phase light-receiving portion which receive lights having phases different from each other by an integral multiple of $\pi/2$ at the same position,
said pattern end detecting means detects, as the end portion of the measuring pattern, a position where both light intensity of the A-phase light-receiving portion and light intensity of the B-phase light-receiving portion become equal to or greater, or equal to or smaller than a predetermined value.

8.   The linear encoder according to claim 1, wherein
the light receiving element comprises an A-phase light-receiving portion and a B-phase light-receiving portion, which receive lights having phases different from each other by a predetermined amount at the same position, and further a light-receiving portion of negative-phase (XA-phase) of A-phase and a light-receiving portion of negative-phase (XB-phase) of B-phase which have phase different respectively from the A-phase light-receiving portion and the B-phase light-receiving portion by an odd multiple of $\pi$,

said pattern end detecting means detects, as the end portion of the measuring pattern, a position where a value of $(A-XA)^2 + (B-XB)^2$ becomes equal to or smaller than a predetermined value, where A is light intensity of the A-phase light-receiving portion, XA is light intensity of the XA-phase light-receiving portion, B is light intensity of the B-phase light-receiving portion, and XB is light intensity of the XB-phase light-receiving portion.

FIG. 1

FIG. 2A

5    3

12

11

FIG. 2B

A-PHASE          A-PHASE

7A                7A

7B                7B

B-PHASE          B-PHASE

FIG. 2C
A-PHASE

FIG. 2D
B-PHASE

ORIGIN

FIG. 3

20

A-PHASE
OUTPUT

Vref

COMPARATOR

22

AND → ORIGIN OUTPUT

21

B-PHASE
OUTPUT

Vref

COMPARATOR

P

FIG. 4A    A-PHASE

FIG. 4B    B-PHASE

FIG.4C    A-PHASE

FIG. 4D    B-PHASE

FIG. 4E
A-PHASE
AND
B-PHASE

ORIGIN

FIG. 5A

5    3

12

11

FIG. 5B

7XA    XA-PHASE    A-PHASE    7XA    X A-PHASE    A-PHASE

7XA    7A    7A

7B    7B

7XB    7XB

XB-PHASE    B-PHASE    7XB    X B-PHASE    B-PHASE

FIG. 5C
A-PHASE

FIG. 5D
XA-PHASE

FIG. 5E
B-PHASE

FIG. 5F
XB-PHASE

FIG. 6

A-PHASE OUTPUT
XA-PHASE OUTPUT
→ SUBTRACTER (23) → SQUARE (24)

B-PHASE OUTPUT
XB-PHASE OUTPUT
→ SUBTRACTER (25) → SQUARE (26)

→ ADDER (27) → COMPARATOR (28) → ORIGIN OUTPUT

Vref

FIG. 7A  A-PHASE

FIG. 7B  XA-PHASE

FIG. 7C  A-PHASE –
XA-PHASE

FIG. 7D  B-PHASE

FIG. 7E  XB-PHASE

FIG. 7F  B-PHASE –
XB-PHASE

FIG. 7G

P

$\alpha$

$\alpha$

$2\,\alpha$

$\alpha$

$\alpha$

$2\,\alpha$

$4\,\alpha^2$

ORIGIN

FIG. 8